# EUROPÄISCHE PATENTANMELDUNG

(11) **EP 4 760 088 A1**
(43) Veröffentlichungstag der Anmeldung: **17.06.2026**
(21) Anmeldenummer: 25217322.4
(22) Anmeldetag: 20.11.2025
(51) Int. Cl.: F03B 17/06, F03D 5/06

(54) **VORRICHTUNG UND VERFAHREN ZUR UMWANDLUNG VON ENERGIE AUS EINER STRÖMUNG**

(30) Priorität: 16.12.2024 LU 509359
(71) Anmelder: Rieth, Alexander Stephan, 66606 St. Wendel (DE)
(72) Erfinder: Rieth, Alexander Stephan, 66606 St. Wendel (DE)
(74) Vertreter: Patentanwälte Bernhardt / Wolff Partnerschaft mbB

(57) **Zusammenfassung**

Die Erfindung betrifft eine Vorrichtung 1 zur Umwandlung von Energie aus einer Strömung, die bei geringen Herstellungskosten und minimalem Materialeinsatz einen niedrigen CO₂-Fußabdruck erreicht und damit potenziell sehr kostengünstige und saubere Energie zur Verfügung stellt. Dazu muss sie eine einfache und kostengünstige Wartung ermöglichen. Sie hat ein flexibles Design, welches sich nahtlos in bestehende Bauwerke und Gelände integrieren lässt und darüber hinaus sehr weit skalierbar ist um es sowohl als mobile Energiequelle als auch in Konkurrenz zu heutigen Großanlagen wirtschaftlich nutzbar zu machen. Die Anlage arbeitet in annähernd allen vorkommenden Strömungen effizient. Die Erfindung ermöglicht einen kostengünstigen Zugang zu den grundlastfähigen Höhenwinden. Sie ist platzsparend und sehr kompakt im Transport und stellt im Betrieb keine Gefahr für Vögel, Fische und andere Lebewesen dar. Bei Bedarf kann die Vorrichtung schnell auf- und abgebaut werden, um den Betrieb bei kreuzendem Schiffs- und Flugverkehr zu ermöglichen. Um all diese Herausforderungen zu lösen und eine effiziente Umwandlung von Energie aus der Strömung zu ermöglichen, ist ein zwischen zwei Lagerstellen 5a, 5b gespanntes Segel 2 vorgesehen, wobei in einer Lagerstelle 5b ein Ende des Segels 2 um eine Rolle 6 geführt ist und eine Arbeitsmaschine 11 über eine Abtriebsachse 10 mit der Rolle verbindbar ist, um Energie aus einer Längsschwingung des Segels 2 umzuwandeln.

## Beschreibung

Die Erfindung betrifft eine Vorrichtung zur Umwandlung von Energie aus einer Strömung nach dem Oberbegriff des Anspruchs 1 sowie ein Verfahren.

Es sind verschiedene Vorrichtungen zur Umwandlung von Energie aus Strömungen bekannt. Einen großen Anteil bilden hierbei traditionelle Windräder, die jedoch die meisten Anforderungen an eine optimale Anlage nicht erfüllen.

Der Erfindung liegt damit zu Grunde mit geringen Herstellungskosten und minimalem Materialeinsatz einen niedrigen CO₂-Fußabdruck zu erreichen und damit potenziell sehr kostengünstige und saubere Energie zur Verfügung zu stellen. Dazu muss Sie eine einfache und kostengünstige Wartung ermöglichen. Es muss ein flexibles Design gefunden werden welches sich nahtlos in bestehende Gebäude, Bauwerke, Strukturen und Gelände integrieren lässt und sehr weit skalierbar ist, um es sowohl als mobile Energiequelle zur direkten Nutzung für einen privaten Haushalt als auch in Konkurrenz zu heutigen Großanlagen wirtschaftlich nutzbar zu machen.

Die Anlage sollte sowohl bei turbulenten Winden, sehr niedrigen sowie sehr hohen Windgeschwindigkeiten effizient arbeitet können. Die Erfindung sollte auch einen kostengünstigen Zugang zu den grundlastfähigen Höhenwinden ermöglichen. Darüber hinaus sollte sie platzsparend und sehr kompakt im Transport sein und im Betrieb keine Gefahr für Vögel, Fische und andere Lebewesen darstellen. Bei Bedarf sollten große Teile der Konstruktion schnell und leicht aus dem Weg geräumt werden können, um z.B. Schiffs- und Flugverkehr nicht zu beeinträchtigen, beziehungsweise die damit kreuzenden Strömungen überhaupt nutzen zu können.

Nur mit einer solchen innovativen und neuen Technologie kann eine zukunftsweisende Lösung für nachhaltige Energiegewinnung aus Wind und Wasser erfolgen.

Die diese Aufgabe lösende Vorrichtung ist gekennzeichnet durch ein zwischen zwei Lagerstellen vorzugsweise geradlinig gespanntes Segel, wobei in mindestens einer Lagerstelle ein Ende des Segels um eine Rolle geführt ist und eine Arbeitsmaschine mit einer Abtriebsachse mit der Rolle verbindbar ist, um Energie aus einer Längsschwingung des Segels umzuwandeln. Ein derartiges Segel kann durch eine angepasste Vorspannung in beinahe jeder Strömungsgeschwindigkeit schwingen und erfüllt in verschiedenen Ausführungen potenziell alle oben genannten Kriterien. Die Arbeitsmaschine kann dabei direkt mit der Achse der Rolle verbunden sein oder es können eine oder mehrere Getriebestufen dazwischen angeordnet sein. Des Weiteren kann auch an beiden Lagerstellen jeweils eine Rolle mit einer Arbeitsmaschine vorgesehen sein, um die Schwingungsenergie an beiden Lagerstellen abzugreifen.

Dabei kann das Segel in einer Lagerstelle, insbesondere in der Lagerstelle entgegengesetzt zur Rolle, vorzugsweise drehfest oder um einen definierten Winkel verdrehbar befestigt sein. Bei dem definierten Winkel kann es sich um eine Drehbewegung von kleiner/gleich 90°, insbesondere kleiner/gleich 30°, handeln, welche konstruktiv beispielsweise mittels entsprechender Anschläge in einem Drehgelenk vorgegeben ist.

Vorteilhaft kann das Segel durch ein Seil gebildet werden, an welchem besonders vorteilhaft zumindest abschnittsweise eine schwingungsfördernde Struktur, insbesondere ein Segeltuch, befestigt ist. Die schwingungsfördernde Struktur wandelt die Energie eines umströmenden Fluids in eine darauf resultierende periodische Zugbewegung an seinen Enden um. Die schwingungsfördernde Struktur, insbesondere das Segeltuch, kann dabei zwischen freien Enden des Segels angeordnet sein und vorzugsweise mittig zwischen den Enden oder mittig der größtmöglichen Strömung die größte Breite aufweisen. Die schwingungsfördernde Struktur, insbesondere das Segeltuch, welches vorzugsweise keine definierte Krümmung aufweist, also flach bzw. eben ist, aus einem verformbaren, biegeschlaffen Material besteht und/oder frei an dem Seil hängt, bietet eine Angriffsfläche für den Wind, wodurch die Umwandlung von Energie aus der Strömung weiter verbessert wird.

In einer besonders vorteilhaften Ausführungsform kann der Rolle ein Freilauf zugeordnet sein, welcher in einer Drehrichtung eine drehfeste Verbindung mit der Abtriebsachse aufweist und in der anderen Drehrichtung eine freie Drehung der Rolle gegenüber der Abtriebsachse ermöglicht. Hierdurch wird gewährleistet, dass nur Drehmoment in einer Drehrichtung auf die Abtriebsachse übertragen wird und in der anderen Drehrichtung sich die Rolle frei gegenüber der Abtriebsachse drehen kann, also eine Gleichrichtung. So kann beispielsweise bei einem Zug des Segels auf die Rolle Drehmoment auf die Abtriebsachse übertragen werden und bei einer Bewegung des Segels in der entgegengesetzten Richtung kann die Rückbewegung des Segels durch den Freilauf bzw. die Entkopplung von der Abtriebsachse unterstützt werden. Der Freilauf kann dabei in der Rolle am Übergang zur Achse der Rolle oder auch in einem nachgeordneten Getriebe in einem der Getrieberäder angeordnet sein.

Zusätzlich kann auch ein weiterer Freilauf vorgesehen sein, welcher entgegengesetzt wirksam zu dem ersten Freilauf montiert ist, um in beiden Drehrichtungen der Rolle ein Drehmoment in einer einzigen Drehrichtung der Abtriebsachse zu übertragen. Die Freiläufe können dabei jeweils in einem Getrieberad integriert sein, welche an der gleichen Achse wie die Rolle gelagert sind und über ein weiteres Getrieberad miteinander verbunden sind bzw. kämmen. Hierdurch kann in beiden Bewegungsrichtungen des Segels ein Drehmoment auf die Abtriebsachse übertragen werden.

Das Segel kann vorteilhaft über ein Federelement vorgespannt sein, welches beispielsweise als Spiralfeder an der Achse der Umlenkrolle oder der Rolle selbst angreift oder als Zugfeder ein Ende des Segels gegenüber einem Festlager verspannt. Die Vorspannung des Federelements kann dabei in Abhängigkeit von der Strömungsgeschwindigkeit einstellbar sein, insbesondere über eine mechanische, elektronische und/oder strömungsbetätigte Vorspannvorrichtung. Da die Rolle ein Festlager ist, liegt vorteilhaft in der mechanischen Reihenfolge außerhalb der beiden Lagerstellen, insbesondere hinter der Rolle, ein Federmechanismus, der durch seinen Federweg an dem ansonsten besonders dehnungssteifen Seil die Drehschwingung ermöglicht. Folglich gibt es vorteilhaft neben dem dehnungssteifen Seil kein flexibles Element zwischen den Lagerstellen.

Die Vorspannvorrichtung kann eine Messeinrichtung für die Ermittlung der Längsschwingung des Segels, also die periodische Längsbewegung des Segels, aufweisen. Die Messeinrichtung kann beispielsweise als Drehsensor ausgebildet sein, welcher die Drehschwingung der Rolle oder einer mit der Rolle verbundenen Achse erfasst. In Abhängigkeit hiervon kann die Vorspannvorrichtung die Vorspannung des Federelements derart regeln, dass eine gewünschte Längsschwingung erreicht und anschließend beibehalten wird. Dies ermöglicht es, über die Vorspannvorrichtung zuerst eine verhältnismäßig geringe Vorspannung einzustellen, so dass auch eine langsame Strömung von Wind oder Wasser das Segel in Schwingung versetzen kann. Sobald eine entsprechende Schwingung durch die Messeinrichtung erkannt wird, kann die Vorspannvorrichtung die Vorspannung des Segels erhöhen, bis ein gewünschtes Maximum der Längsschwingung erreicht ist. Wenn sich die Strömungsgeschwindigkeit ändert, kann die Vorspannvorrichtung die Vorspannung wieder anpassen, um erneut den optimalen Betriebspunkt zu finden. Die einstellbare Vorspannung kann auch dazu genutzt werden, um mit besonders starker Vorspannung die Ausschwingung und damit durch die Schwingung umstrichene Angriffsfläche zu begrenzen. Dies schützt das System bei starkem Wind vor Schaden, wobei es dennoch einsatzbereit bleibt. Ebenso lässt sich die Spannung so weit verringern, dass gar keine Schwingung mehr stattfindet was das System beispielsweise bei Sturmschutz oder zur Wartung deaktiviert.

Die Vorspannvorrichtung kann dabei auch einen Sensor zur Ermittlung der Strömungsgeschwindigkeit erfassen, so dass mit dem Wert der aktuellen Strömungsgeschwindigkeit und ggf. einer Datenbank und/oder Formel zur Bestimmung der optimalen Vorspannung die passende Vorspannung schnell berechnet und eingestellt werden kann.

Die Vorspannvorrichtung kann dabei auch eine manuelle Einstellmöglichkeit aufweisen mit der der Bediener selbst die Schwingungsamplitude einstellen kann.

Bei der Arbeitsmaschine kann es sich vorzugsweise um einen elektrischen Generator zur Erzeugung von elektrischer Energie oder um eine Pumpe zur Förderung eines Fluids handeln.

Das Segel der Vorrichtung kann in einer Luftströmung oder einer Wasserströmung angeordnet sein, so dass die Vorrichtung an einer Vielzahl von Orten verwendet werden kann.

Besonders vorteilhaft können mehrere zwischen zwei Lagerstellen gespannte Segel mit zugeordneten Rollen vorgesehen sein, wobei die Rollen miteinander beispielsweise über eine gemeinsame Achse verbunden sind. Hierdurch kann die Schwingungsenergie mehrerer Segel zusammengefasst und beispielsweis an eine einzige Arbeitsmaschine übertragen werden.

Als beispielhafte und nicht abschließende Aufzählung kann eine Lagerstelle der Vorrichtung am Boden, an einem Gebäude, an einem Bauwerk wie Strommasten, an einer Anhöhe bzw. an einem Berg, an einer Brücke, an einem Baum oder an einem Luftfahrzeug wie beispielsweise einem Heißluft- bzw. Gasballon oder Drachen/Kite angeordnet sein. Die gegenüberliegende Lagerstelle kann gleichermaßen an einer der genannten Stellen gelagert sein, wobei jede Kombination zwischen den vorgenannten Orten umsetzbar ist.

Des Weiteren wird auch ein Verfahren zur Umwandlung von Energie aus einer Strömung beansprucht, welches gekennzeichnet ist durch ein zwischen zwei Lagerstellen gespanntes Segel, wobei in mindestens einer Lagerstelle ein Ende des Segels um eine Rolle geführt ist, wobei das Segel durch eine Strömung, vorzugsweise rechtwinklig zur Strömungsrichtung in Schwingung versetzt wird und eine durch die Längsschwingung des Segels verursachte oszillierende Drehbewegung der Rolle verwendet wird, um Energie umzuwandeln. Vorteilhaft kann das Segel ein dehnungssteifes Seil umfassen, an welchem besonders vorteilhaft zumindest abschnittsweise eine schwingungsfördernde Struktur, insbesondere ein Segeltuch, befestigt ist. Durch das dehnungssteife Seil wird verhindert, dass aufgrund elastischer Verformung in Längsrichtung des Seils der bei der seitlichen Schwingung entstehende Zug im Seil kompensiert wird und nicht als Längsschwingung an der Rolle nutzbar ist. Das Segel rotiert dabei nicht, sondern schwingt hauptsächlich quer zur Windrichtung. Eine Rotation des Segels ist vorzugsweise durch eine einseitig starre Fixierung oder eine Drehverbindung mit begrenztem Drehwinkel vorzugsweise kleiner/gleich 90°, insbesondere kleiner/gleich 30°, ausgeschlossen.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine Draufsicht auf eine Vorrichtung zur Umwandlung von Energie aus einer Strömung gemäß einer ersten Ausführungsform,
- Fig. 2: eine Seitenansicht auf die Vorrichtung von Figur 1,
- Fig. 3: eine Seitenansicht auf eine Vorrichtung zur Umwandlung von Energie aus einer Strömung gemäß einer zweiten Ausführungsform,
- Fig. 4: eine perspektivische Darstellung einer ersten Ausführungsform eines Getriebes einer Vorrichtung gemäß Figur 1 oder 3,
- Fig. 5: eine perspektivische Darstellung einer zweiten Ausführungsform eines Getriebes einer Vorrichtung gemäß Figur 1 oder 3,
- Fig. 6: eine perspektivische Darstellung der Vorrichtung gemäß Figur 1 angeordnet auf einem freien Hausdach,
- Fig. 7: eine erste perspektivische Darstellung der Vorrichtung gemäß Figur 1 angeordnet auf einem Hausdach mit Solaranlage,
- Fig. 8: eine zweite perspektivische Darstellung der Vorrichtung von Figur 7,
- Fig. 9: eine perspektivische Darstellung der Vorrichtung gemäß Figur 1 an einer Hauskante,
- Fig. 10: eine schematische Darstellung der Anordnung mehrerer Vorrichtungen gemäß Figur 1 zwischen zwei Gebäuden,
- Fig. 11: eine schematische Darstellung der Anordnung einer Vorrichtung gemäß Figur 1 zwischen zwei Bergspitzen,
- Fig. 12: eine schematische Darstellung der Anordnung einer Vorrichtung gemäß Figur 1 zwischen zwei Bäumen,
- Fig. 13: eine schematische Darstellung der Anordnung zweier Vorrichtungen gemäß Figur 1 zwischen zwei Brückenpfeilern in der Luft und im Wasser,
- Fig. 14: eine schematische Darstellung der Anordnung zweier Vorrichtungen gemäß Figur 1 horizontal zwischen zwei Strommasten und vertikal an einem Strommasten,
- Fig. 15: eine schematische Darstellung der Anordnung einer Vorrichtung gemäß Figur 1 zwischen einer Lagerstelle am Boden und einer Bergspitze,
- Fig. 16: eine schematische Darstellung der Anordnung einer Vorrichtung gemäß Figur 1 zwischen einer Lagerstelle am Boden und einem Luftfahrzeug,
- Fig. 17: eine perspektivische Darstellung einer Anordnung zweier Vorrichtungen gemäß Figur 1 an Auslegern einer drehbaren Tragsäule,
- Fig. 18: eine schematische Darstellung der Anordnung einer Vorrichtung gemäß Figur 1 zwischen einander gegenüberliegenden Uferstellen eines Flusses,
- Fig. 19: eine perspektivische Darstellung des Getriebes gemäß Figur 5 mit einer Arbeitsmaschine;
- Fig. 20: eine perspektivische Darstellung einer dritten Ausführungsform eines Getriebes
- Fig. 21: eine schematische Darstellung eines alternativen Segels und
- Fig. 22: eine perspektivische Darstellung einer vierten Ausführungsform eines Getriebes.

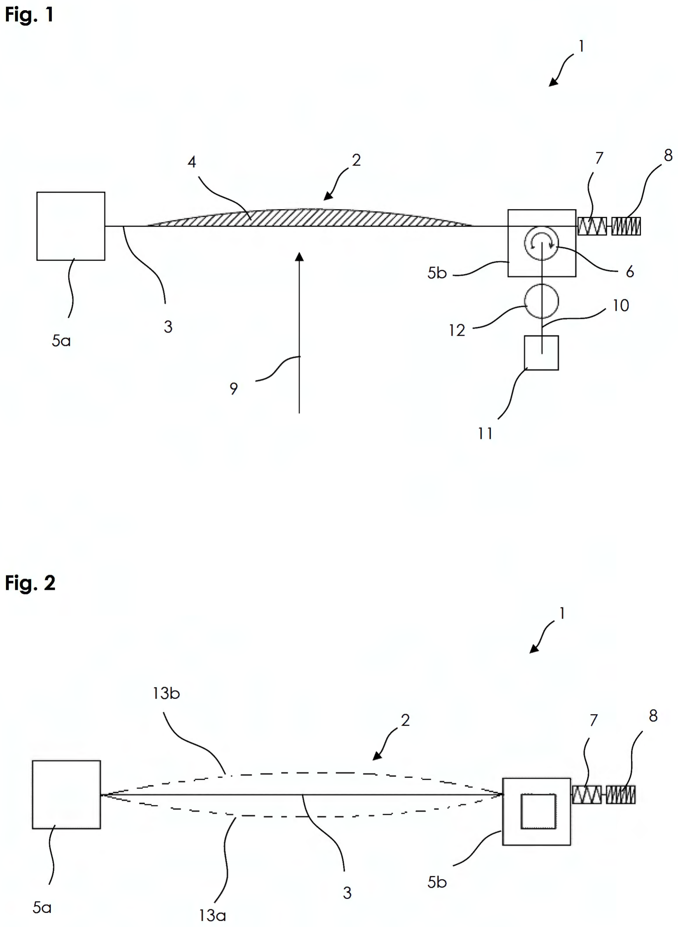

In Figur 1 ist eine Draufsicht auf eine Vorrichtung 1 zur Umwandlung von Energie aus einer Strömung gemäß einer ersten Ausführungsform gezeigt. Die Vorrichtung 1 umfasst ein Segel 2, welches durch ein Seil 3 und ein schwingungsförderndes Segeltuch 4 gebildet wird, sowie zwei Lagerstellen 5a, 5b, zwischen welchen das Segel 2 gespannt ist. Die Lagerstelle 5b ist als Getriebe mit einer Rolle 6 in Form einer Umlenkrolle ausgebildet, um welche das Seil 3 des Segels 2 gewickelt ist. Ein freies Ende des Seils 3 ist an einem Federelement 7 befestigt, wobei das gegenüberliegende Ende des Federelements 7 über eine Vorspannvorrichtung in Form einer Vorspannschraube 8 gegenüber einem nicht gezeigten Festlager verspannt ist. Durch Verstellen der Vorspannschraube 8 kann somit die Spannung des Seils 3 über die Rolle 6 hinweg bis zu der gegenüberliegenden Lagerstelle 5a verändert werden.

Wenn eine Strömung in Richtung des Pfeils 9 auf das Segel 2 auftrifft, gerät das Segel 2 in Schwingung, welche sich an der Lagerstelle 5b in Form einer Längsbewegung des Segels in Längsrichtung des Seils 3 äußert. Die Rolle 6 wird hierdurch zu einer oszillierenden Drehschwingung angeregt. Über einen im nachfolgenden noch beschriebenen Freilauf kann diese Drehschwingung als gerichtete, gleichförmige Drehbewegung über eine Abtriebsachse 10 zu einer Arbeitsmaschine 11 übertragen werden, um beispielsweise elektrische Energie zu erzeugen. Zur Unterstützung der gleichförmigen Drehbewegung kann zwischen der Rolle 6 und der Arbeitsmaschine 10 eine Schwungmasse 11 vorgesehen sein.

In Figur 2 ist eine Seitenansicht auf die Vorrichtung 1 von Figur 1 gezeigt. Wie dort zu entnehmen ist, kann das Segel 2 zwischen der mit durchgezogener Linie gezeigten Ruhestellung und den mit gestrichelter Linie dargestellten Schwingungsamplituden 13a, 13b schwingen, wodurch sich jeweils eine Zugkraft und Längsbewegung des Seils 3 an der Lagerstelle 5b ergibt. Die Vorspannvorrichtung 8 beeinflusst dabei die Höhe der Ausschwingung 13a und 13b.

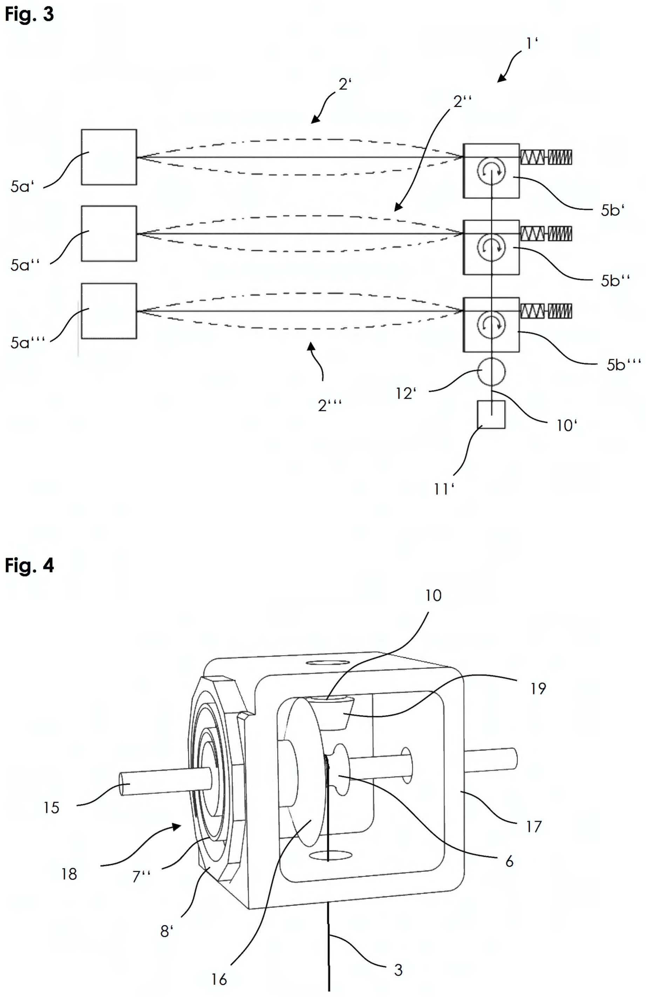

In Figur 3 ist eine Seitenansicht auf eine Vorrichtung 1' zur Umwandlung von Energie aus einer Strömung gemäß einer zweiten Ausführungsform gezeigt. Die bereits aus der ersten Ausführungsform beschriebenen identischen Merkmale sind mit den gleichen Bezugszeichen, jedoch einem hinzugefügten Apostroph gekennzeichnet. Wie der Darstellung in Figur 3 zu entnehmen ist, sind bei der zweiten Ausführungsform mehrere zwischen zwei Lagerstellen 5a' und 5b', 5a"und 5b" sowie 5a‴ und 5b‴ gespannte Segel 2', 2" und 2‴ mit zugeordneten Rollen in den Lagerstellen 5b', 5b" und 5b‴ vorgesehen, wobei die Rollen zum Antrieb der Arbeitsmaschine 11' über die Abtriebsachse 10' miteinander verbunden sind. Durch das Zusammenführen der Schwingungsbewegungen mehrerer Segel auf eine gemeinsame Abtriebsachse wird das Drehmoment und auch der Gleichlauf erhöht und aufgrund der Einsparung zusätzlicher Komponenten der Herstellungsaufwand reduziert.

In Figur 4 ist eine perspektivische Darstellung einer ersten Ausführungsform eines Getriebes 14 einer Vorrichtung 1, 1' gemäß Figur 1 oder 3 gezeigt. Das Getriebe 14 kann vorzugsweise in den Lagerstellen 5b, 5b', 5b", 5b‴ verwendet werden, um die Längsschwingung des Seils 3 in eine gleichförmige Drehbewegung der Abtriebsachse 10 umzuwandeln. Wie Figur 4 zu nehmen ist, umfasst das Getriebe 14 eine Zwischenachse 15, auf welcher die Rolle 6 drehfest befestigt ist. Auf der Zwischenachse 15 ist zudem ein Kegelzahnrad 16 angeordnet, wobei zwischen der Zwischenachse 15 und dem Kegelzahnrad 16 ein hier nicht dargestellter Freilauf vorgesehen ist, so dass eine Drehbewegung der Zwischenachse 15 nur in einer Drehrichtung auf das Kegelzahnrad 16 übertragen wird. An einer Lagerstelle der Zwischenachse 15 an einem Gehäuse 17 des Getriebes 14 ist ein Einstellelement 18 vorgesehen, welches eine mit dem Gehäuse 17 vorzugsweise form- und/oder reibschlüssig verbundene Vorspannvorrichtung 8' und ein mit einem inneren Ende mit der Zwischenachse 15 form- und/oder reibschlüssig verbundenes Federelement 7" umfasst. Das äußere Ende des Federelements 7" ist mit der Vorspannvorrichtung 8' form-, reib- und/oder stoffschlüssig verbunden, so dass die Vorspannung des Federelements 7"durch Verdrehen der Vorspannvorrichtung 8' gegenüber dem Gehäuse 17 und formschlüssigem Einsetzen in eine entsprechende Aussparung in dem Gehäuse 17 eingestellt werden kann, wodurch der Zug auf das Seil 3 veränderbar ist.

Durch den nicht dargestellten Freilauf wird das Kegelzahnrad 16 in einer Drehrichtung der Zwischenachse 15 in Drehbewegung versetzt, wobei das Kegelzahnrad 16 mit einem ebenfalls in dem Gehäuse 17 drehbar gelagerten Ritzel 19 kämmt und hierdurch die Drehbewegung auf eine mit dem Ritzel 19 verbundene Abtriebsachse 10 überträgt. Der weitere Abtrieb von der Abtriebsachse 10 aus dem Gehäuse 17 heraus zu einer Arbeitsmaschine ist hier nicht dargestellt.

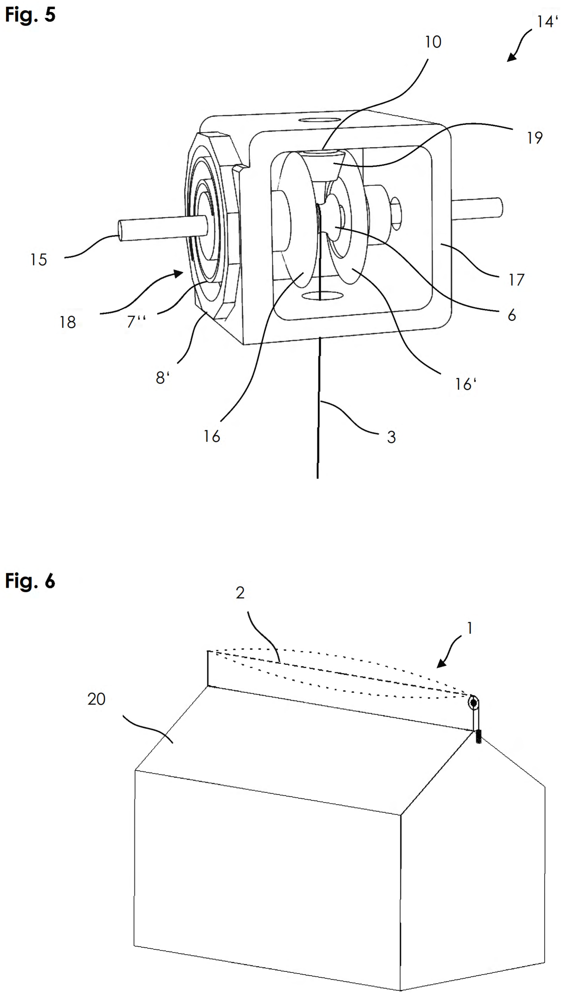

In Figur 5 ist eine perspektivische Darstellung einer zweiten Ausführungsform eines Getriebes 14' gezeigt. Die aus der in Figur 4 gezeigten ersten Ausführungsform bekannten Merkmale sind mit den gleichen Bezugszeichen versehen. Wie sich aus dem Vergleich mit Figur 4 ergibt, ist bei der in Figur 5 gezeigten Ausführungsform ein zusätzliches Kegelzahnrad 16' vorgesehen, welches ebenfalls über einen nicht gezeigten Freilauf mit der Zwischenachse 15 verbunden ist. Die Freiläufe der Kegelzahnräder 16, 16' sind in entgegengesetzter Richtung orientiert, so dass bei jeder Drehrichtung der Rolle 6 die Drehbewegung nur über eines der Kegelzahnräder 16, 16' auf das Ritzel 19 und damit die Abtriebsachse 10 übertragen wird. Hierdurch wird ermöglicht, dass in beiden Drehrichtungen der Rolle 6 jeweils ein gleichgerichtetes Drehmoment auf die Abtriebsachse 10 und damit eine dort angebundene Arbeitsmaschine geleitet werden kann.

In Figur 6 ist eine perspektivische Darstellung der Vorrichtung 1 auf einem freien Hausdach 20 gezeigt. Das Segel 2 ist dabei vorzugsweise in Richtung und oberhalb des Dachfirsts des Hausdachs 20 aufgespannt, so dass eine Luftströmung, welche über das Hausdach 20 gedrückt wird, dass Segel 2 streift. Hierdurch wird gegenüber einer frei aufgehängten Vorrichtung eine zusätzliche Verstärkung der Windströmung erreicht. Durch die kontrollierte Federvorspannung wird verhindert das das Segel bei starkem Wind mit dem Dachfirst kollidiert. Bei einem Flachdach kann das Segel vorzugsweise in Richtung einer Dachkante orientiert sein und/oder oberhalb hiervon angeordnet sein.

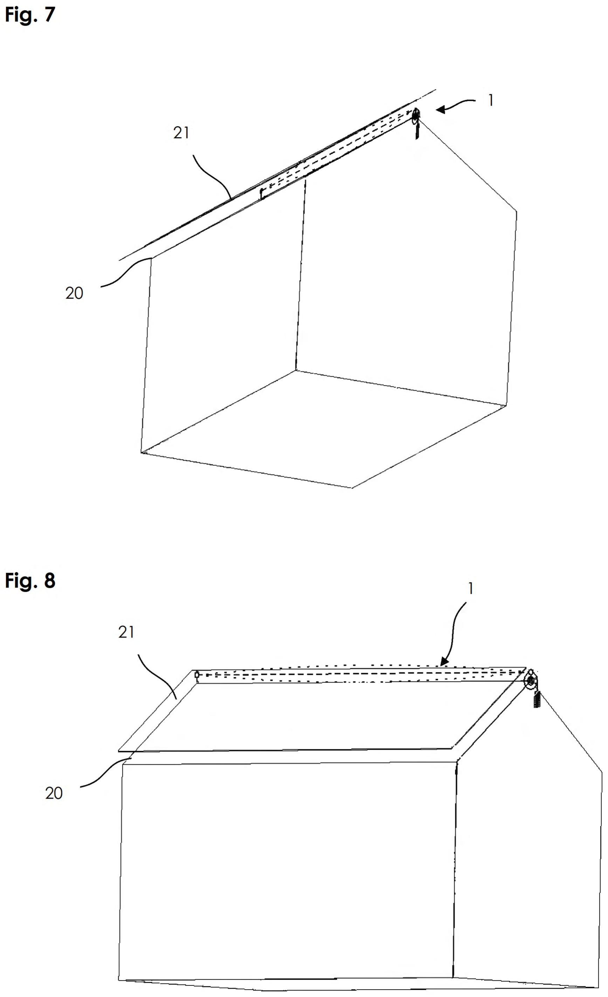

In den Figuren 7 und 8 sind perspektivische Darstellungen der Vorrichtung 1 angeordnet auf einem Hausdach 20 mit Solaranlage 21 gezeigt. Die Solaranlage 21 ist in Figur 8 transparent dargestellt, um die Vorrichtung 1, deren Segel ebenfalls wie in Figur 6 entlang des Dachfirsts und oberhalb hiervon verläuft, kenntlich zu machen. Durch die Anordnung der Solaranlage 21 in einem Abstand von dem Hausdach 20 wird eine besonders effiziente Verstärkung der Luftströmung erreicht, welche auf der gegenüberliegenden Dachseite zusätzlich durch einen Unterdruck angesaugt wird. Hierdurch wird eine besonders effiziente Erhöhung der Windgeschwindigkeit auch bei im Durchschnitt eher geringen Windgeschwindigkeiten erreicht. Durch den engen Raum zwischen Dach und Solarpaneel muss die Ausschwingung hier besonders exakt kontrolliert werden, damit das Segel nicht dagegen schlägt.

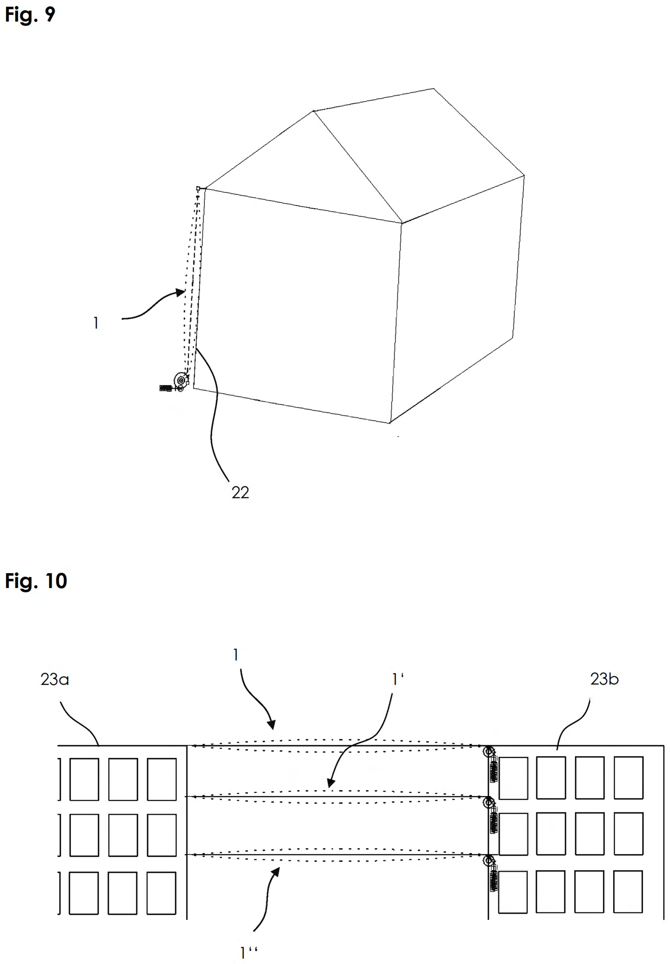

In Figur 9 ist eine perspektivische Darstellung der Vorrichtung 1 gemäß Figur 1 an einer Hauskante 22 gezeigt. Eine das Haus umströmende Luftströmung erreicht im Bereich der Hauskante 22 eine besonders hohe Strömungsgeschwindigkeit, so dass die Vorrichtung 1 besonders effizient angeströmt wird. Alternativ kann die Vorrichtung 1 auch an anderen Gebäuden beispielsweise mit runden Außengeometrien, z. B. Silos, vorzugsweise vertikal angeordnet werden.

In Figur 10 ist eine schematische Darstellung der Anordnung mehrerer Vorrichtungen 1, 1', 1" zwischen zwei Gebäuden 23a, 23b gezeigt. Durch die vorzugsweise parallele Ausrichtung der hier nicht bezifferten Segel 2 der Vorrichtungen 1,1' und 1" zueinander und den Versatz der Vorrichtungen in der Höhe an den Gebäuden 23a, 23b kann eine Luftströmung großflächig abgegriffen werden.

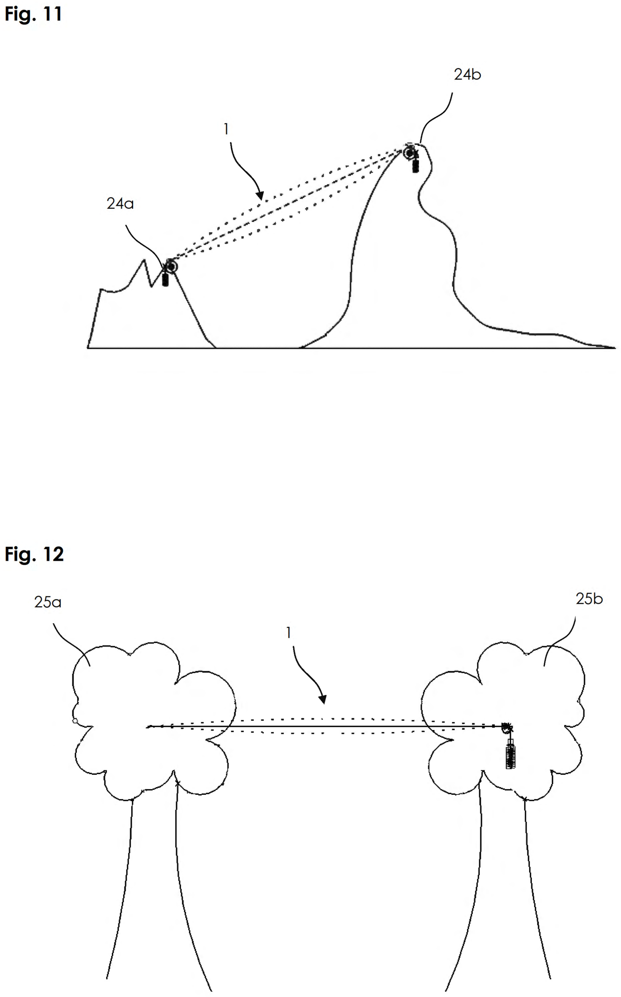

Im Figur 11 ist eine schematische Darstellung der Anordnung einer Vorrichtung 1 gemäß Figur 1 zwischen zwei Bergspitzen 24a, 24b gezeigt. Hierdurch können in großer Höhe große Entfernungen überbrückt werden, wodurch besonders hohe Schwingungsenergien abgegriffen werden können. Wie der Darstellung weiter zu entnehmen ist, kann auch an beiden Lagerstellen der Vorrichtung 1 jeweils eine Rolle mit einer Arbeitsmaschine vorgesehen sein, um die Schwingungsenergie an beiden Lagerstellen abzugreifen.

Im Figur 12 ist eine schematische Darstellung der Anordnung einer Vorrichtung 1 gemäß Figur 1 zwischen zwei Bäumen 25a, 25b gezeigt. Die Ausführungsform kann mit besonders geringem Aufwand hergestellt werden, da lediglich die Vorrichtung 1 an bereits bestehenden Bäumen befestigt werden muss.

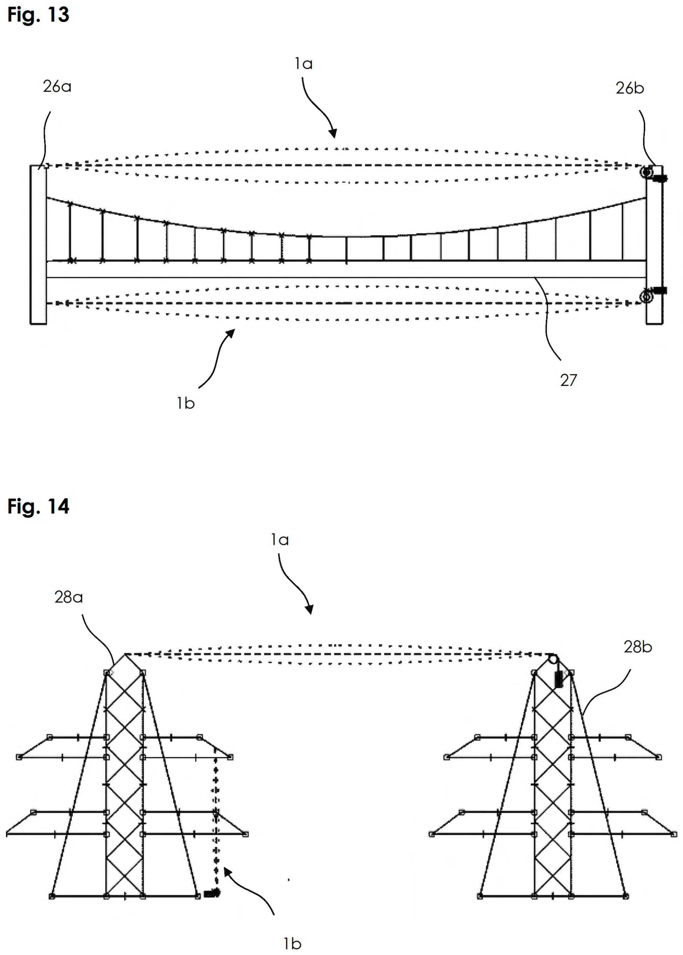

Im Figur 13 ist eine schematische Darstellung der Anordnung zweier Vorrichtungen 1a, 1b gemäß Figur 1 zwischen zwei Brückenpfeilern 26a, 26b in der Luft und im Wasser gezeigt. Wie der Darstellung zu nehmen ist, ist jeweils eine Vorrichtung 1a oberhalb und eine weitere Vorrichtung 1b unterhalb einer Wasserlinie 27 angeordnet, so dass sowohl die Luftströmung als auch die Wasserströmung abgegriffen werden kann. Durch Entspannen des Seils legt es sich am Flussbett ab wodurch die parallele Nutzung des Flusses als Wasserstraße sowie die Energiegewinnung aus der Flussströmung ermöglicht wird.

In Figur 14 ist eine schematische Darstellung der Anordnung zweier Vorrichtungen 1a, 1b gemäß Figur 1 horizontal zwischen zwei Strommasten 28a, 28b und vertikal an einem Strommasten 28a gezeigt. Es versteht sich, dass noch weitere Vorrichtungen an und/oder zwischen den Strommasten vorgesehen werden können, um noch in zusätzlichen Bereichen Energie aus der Luftströmung abzugreifen, die hier direkt ins Stromnetz eingespeist werden können.

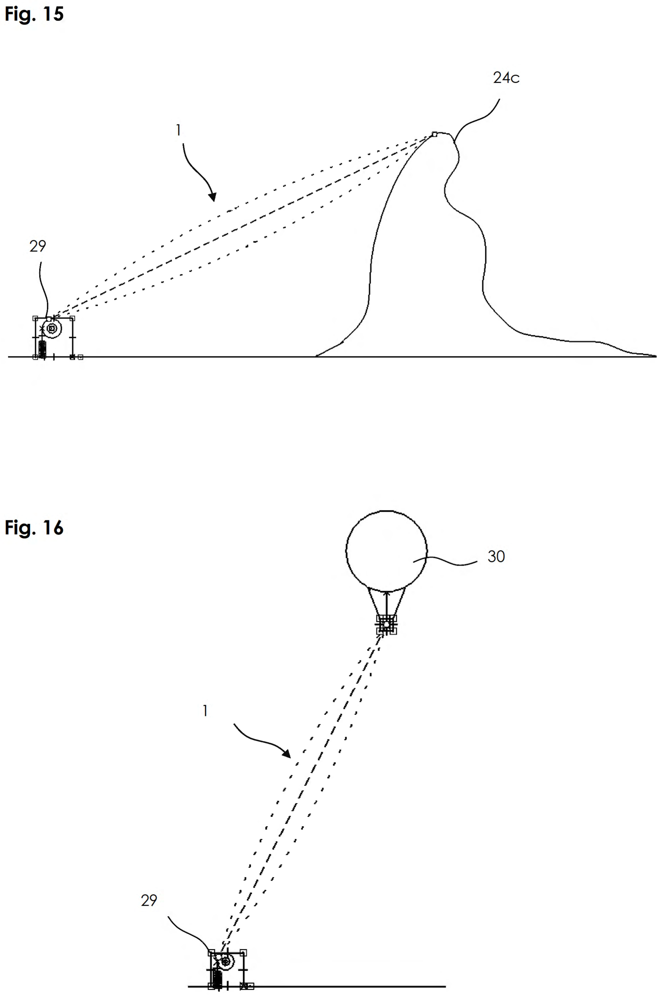

In Figur 15 ist eine schematische Darstellung der Anordnung einer Vorrichtung 1 gemäß Figur 1 zwischen einer Lagerstelle 29 am Boden und einer Bergspitze 24c gezeigt. Anstelle der Bergspitze 24c kann die weitere Lagerstelle auch durch ein Luftfahrzeug 30 wie beispielsweise dem in Figur 16 gezeigten Heißluftballon oder auch einen Gasballon oder Drachen gebildet werden, wodurch sich die stärkeren und gleichmäßigen Höhenwinde nutzen lassen.

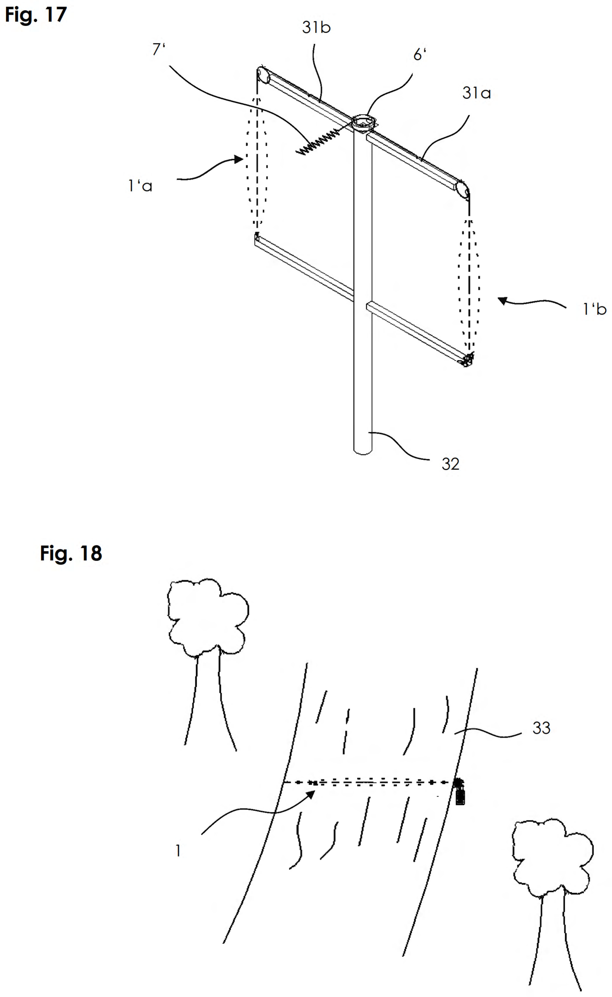

In Figur 17 ist eine perspektivische Darstellung der Anordnung zweier Vorrichtungen 1'a, 1'b gemäß Figur 1 an Auslegern 31a, 31b einer Tragsäule 32 gezeigt. Wie dort zu entnehmen ist, sind die Vorrichtungen 1'a, 1'b anders als bei den in Figuren 1 und 3 gezeigten Ausführungsformen mit den hier nicht bezifferten Seilen an einer gemeinsamen Rolle 6' befestigt, wobei die Rolle 6' über einen nicht gezeigten Freilauf mit einer ebenfalls nicht gezeigten Achse innerhalb der Tragsäule 32 verbunden ist. Die Achse ist feststehend ausgebildet und die Tragsäule 32 ist drehbar um die nicht gezeigte Achse gelagert. Das schematisch dargestellte Federelement 7' ist anders als dargestellt zwischen der drehbar gelagerten Tragsäule 32 und der Rolle 6' vorgesehen. Wenn aufgrund von einer Windströmung die Vorrichtungen 1'a und 1'b in Längsschwingung versetzt werden, wird diese Längsschwingung zu einer Drehbewegung der Tragsäule 32, so dass die Vorrichtungen 1'a und 1'b ebenfalls zusätzlich in eine Drehbewegung versetzt werden, wodurch sich die Anströmungsgeschwindigkeit erhöht.

In Figur 18 ist eine schematische Darstellung der Anordnung einer Vorrichtung 1 gemäß Figur 1 zwischen einander gegenüberliegenden Uferstellen eines Flusses 33 gezeigt.

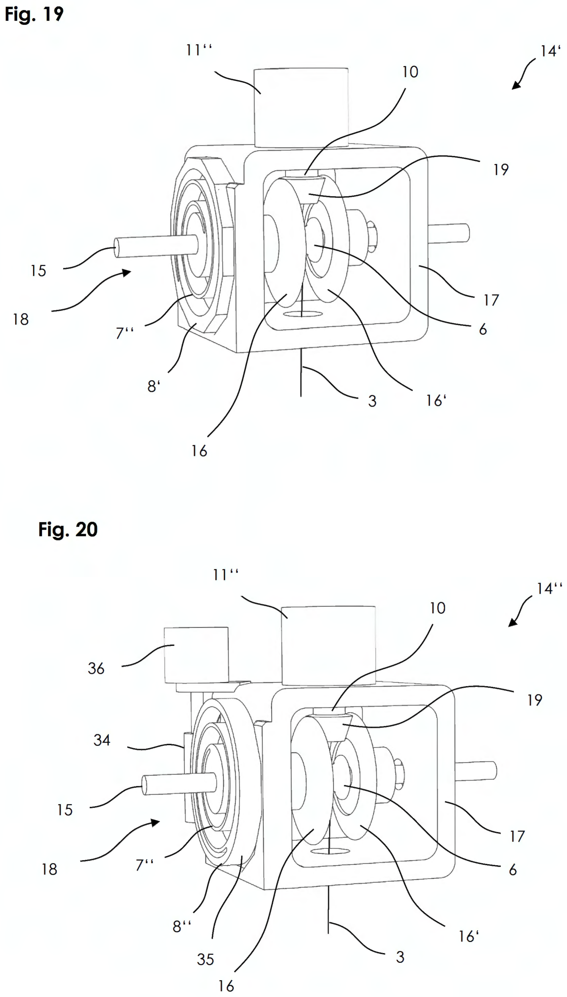

In Figur 19 ist eine perspektivische Darstellung des Getriebes 14' von Figur 5 mit einer Arbeitsmaschine 11" gezeigt. Die Arbeitsmaschine 11'' ist über die Abtriebsachse 10, das Ritzel 19 und die Kegelzahnräder 16, 16' mit der Rolle 6 verbunden, so dass Energie aus einer Längsschwingung des hier nicht dargestellten Segels über die Arbeitsmaschine 11" beispielsweise in Form eines elektrischen Generators in elektrische Energie umgewandelt werden kann. Bei der Arbeitsmaschine 11 '' kann es sich insbesondere um einen Schrittmotor handeln.

In Figur 20 ist eine perspektivische Darstellung einer dritten Ausführungsform eines Getriebes 14'' gezeigt. Wie sich aus dem Vergleich mit der in Figur 19 gezeigten Ausführungsform ergibt, unterscheidet sich diese Variante dadurch, dass eine Vorspannvorrichtung 8" vorgesehen ist, welche anstelle eines formschlüssigen Eingriffs in eine entsprechende Aussparung in dem Gehäuse 17 ein Schneckengetriebe umfassend eine Schneckenwelle 34 und ein Schneckenrad 35 aufweist. Über einen Stellmotor 36 kann die Schneckenwelle 34 und damit das Schneckenrad 35 angetrieben werden, um die Vorspannung des Federelements 7" zu verändern. Eine hier nicht gezeigte Regeleinrichtung kann vorgesehen sein, um die Vorspannung automatisch beispielsweise in Abhängigkeit der gemessenen Windgeschwindigkeit zu verändern.

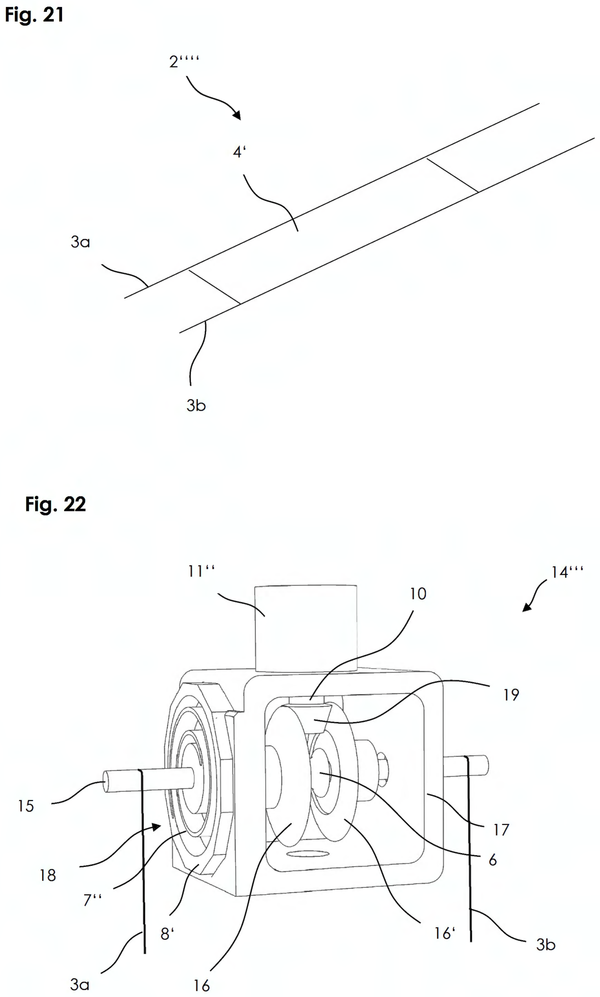

In Figur 21 ist eine schematische Darstellung eines alternativen Segels 2ʺʺ gezeigt. Das Segel 2ʺʺ unterscheidet sich von dem beispielsweise in Figur 1 gezeigten Segel 2 dadurch, dass das Segel 2ʺʺ ein Segeltuch 4' aufweist, welches über zwei Seile 3a, 3b gehalten ist. Über die zwei Seile 3a, 3b kann die Bewegung des Segeltuch 4' und damit die Schwingung des Segels 2ʺʺ besonders gut eingestellt werden. Wie auch bei der in Figur 1 gezeigten Ausführungsform können dabei die Enden der Seile 3a, 3b auf einer Seite, hier beispielsweise auf der rechten Seite, fixiert sein und auf der gegenüberliegenden, beispielsweise linken Seite kann eine erfindungsgemäße Vorrichtung zur Umwandlung von Energie vorgesehen sein.

In Figur 22 ist eine perspektivische Darstellung einer vierten Ausführungsform eines Getriebes 14‴ gezeigt, wie es beispielsweise zur Halterung des Segels 2ʺʺ von Figur 21 verwendet werden kann. Hierzu kann an der Zwischenachse 15 beispielsweise an den gegenüberliegenden, nach außen vorstehenden Enden jeweils ein Seil 3a, 3b befestigt sein, so dass eine Längsschwingung der Seile 3a, 3b gemeinsam zu einer Drehbewegung der Zwischenachse 15 führt. Um die Bewegung des Segels 2ʺʺ zusätzlich zu beeinflussen, kann vorgesehen sein, dass dabei eines der Seile 3a, 3b eine andere Vorspannung aufweist als das weitere Seil 3a, 3b. Ein derartiger Unterschied in der Vorspannung bleibt auch bei einer Längsbewegung der Zeile 3a, 3b und einer periodischen Schwingung der Zwischenachse 15 erhalten und kann ggf. mechanisch oder elektrisch verstellt werden.

### Bezugszeichenliste:

- 1, 1', 1", 1a, 1b, 1'a, 1'b: Vorrichtung zur Umwandlung von Energie
- 2, 2'; 2"; 2‴; 2ʺʺ: Segel
- 3, 3a, 3b: Seil
- 4, 4': Segeltuch
- 5a, 5a', 5a'', 5a‴, 5b, 5b', 5b", 5b‴: Lagerstellen
- 6, 6': Rolle
- 7, 7', 7": Federelement
- 8, 8', 8": Vorspannvorrichtung
- 9: Strömungsrichtung
- 10, 10': Abtriebsachse
- 11, 11', 11": Arbeitsmaschine
- 12, 12': Schwungmasse
- 13a, 13b: Schwingungsamplituden
- 14, 14', 14", 14‴: Getriebe
- 15: Zwischenachse
- 16, 16': Kegelzahnrad
- 17: Gehäuse
- 18: Einstellelement
- 19: Ritzel
- 20: Hausdach
- 21: Solaranlage
- 22: Hauskante
- 23a, 23b: Gebäude
- 24a, 24b, 24c: Bergspitzen
- 25a, 25b: Bäume
- 26a, 26b: Brückenpfeiler
- 27: Wasserlinie
- 28a, 28b: Strommasten
- 29: Lagerstelle am Boden
- 30: Luftfahrzeug
- 31a, 31b: Ausleger
- 32: Tragsäule
- 33: Fluss
- 34: Schneckenwelle
- 35: Schneckenrad
- 36: Stellmotor

## Patentansprüche

1. Vorrichtung (1; 1'; 1"; 1a; 1b; 1'a; 1'b) zur Umwandlung von Energie aus einer Strömung,
**gekennzeichnet durch** ein zwischen zwei Lagerstellen (5a; 5a'; 5a"; 5a‴; 5b; 5b'; 5b", 5b‴) gespanntes Segel (2; 2'; 2"; 2‴; 2ʺʺ), wobei in mindestens einer Lagerstelle (5b; 5b'; 5b", 5b‴) ein Ende des Segels (2; 2'; 2"; 2‴; 2ʺʺ)um eine Rolle (6; 6') geführt ist und eine Arbeitsmaschine (11; 11'; 11") über eine Abtriebsachse (10; 10') mit der Rolle (6; 6') verbindbar ist, um Energie aus einer Längsschwingung des Segels (2; 2'; 2"; 2‴; 2ʺʺ) umzuwandeln.

2. Vorrichtung (1; 1'; 1"; 1a; 1b; 1'a; 1'b) nach Anspruch 1,
**dadurch gekennzeichnet,**
**dass** das Segel (2; 2'; 2"; 2‴; 2ʺʺ) ein vorzugsweise dehnungssteifes Seil (3; 3a; 3b) umfasst, an welchem zumindest abschnittsweise eine schwingungsfördernde Struktur, insbesondere ein Segeltuch (4; 4'), befestigt ist.

3. Vorrichtung (1; 1'; 1"; 1a; 1b; 1'a; 1'b) nach Anspruch 2,
**dadurch gekennzeichnet,**
**dass** die schwingungsfördernde Struktur, insbesondere das Segeltuch (4; 4'), zwischen freien Enden des Seils (3; 3a; 3b) angeordnet ist.

4. Vorrichtung (1; 1'; 1''; 1a; 1b; 1'a; 1'b) nach einem der Ansprüche 1 bis 3,
**dadurch gekennzeichnet,**
**dass** der Rolle (6; 6') ein Freilauf zugeordnet ist, welcher in einer Drehrichtung eine drehfeste Verbindung mit der Abtriebsachse (10, 10') aufweist und in der anderen Drehrichtung eine freie Drehung der Rolle (6; 6') gegenüber der Abtriebsachse (10; 10') ermöglicht.

5. Vorrichtung (1; 1'; 1"; 1a; 1b; 1'a; 1'b) nach einem der vorhergehenden Ansprüche,
**dadurch gekennzeichnet,**
**dass** das Segel (2; 2'; 2"; 2‴; 2ʺʺ) über ein Federelement (7; 7') vorgespannt ist, welches vorzugsweise in der mechanischen Reihenfolge außerhalb der beiden Lagerstellen (5a; 5a'; 5a"; 5a‴; 5b; 5b'; 5b"; 5b‴) sitzt.

6. Vorrichtung (1; 1'; 1''; 1a; 1b; 1'a; 1'b) nach Anspruch 5,
**dadurch gekennzeichnet,**
**dass** die Vorspannung des Federelements (7; 7') in Abhängigkeit von der Strömungsgeschwindigkeit einstellbar ist, insbesondere über eine mechanische, elektronische und/oder strömungsbetätigte Vorspannvorrichtung (8; 8'; 8").

7. Vorrichtung (1; 1'; 1''; 1a; 1b; 1'a; 1'b) nach Anspruch 6,
**dadurch gekennzeichnet,**
**dass** die Vorspannvorrichtung (8; 8'; 8") eine Messeinrichtung für die Ermittlung der Längsschwingung des Segels (2; 2'; 2"; 2‴; 2ʺʺ) umfasst und ausgebildet ist, die Vorspannung des Federelements (7; 7') derart zu regeln, dass eine gewünschte Längsschwingung erreicht wird.

8. Vorrichtung (1; 1'; 1"; 1a; 1b; 1'a; 1'b) nach einem der vorhergehenden Ansprüche,
**dadurch gekennzeichnet,**
**dass** die Arbeitsmaschine (11; 11'; 11") als elektrischer Generator oder als Pumpe ausgebildet ist.

9. Vorrichtung (1; 1'; 1"; 1a; 1b; 1'a; 1'b) nach einem der vorhergehenden Ansprüche,
**dadurch gekennzeichnet,**
**dass** das Segel (2; 2'; 2"; 2‴; 2ʺʺ) in einer Luftströmung oder einer Wasserströmung angeordnet ist.

10. Vorrichtung (1') nach einem der vorhergehenden Ansprüche,
**dadurch gekennzeichnet,**
**dass** mehrere zwischen zwei Lagerstellen (5a', 5a", 5a‴; 5b', 5b", 5b‴) gespannte Segel (2', 2'', 2‴) mit zugeordneten Rollen vorgesehen sind, wobei die Rollen miteinander verbunden sind, insbesondere zum Antrieb einer Arbeitsmaschine (11; 11'; 11").

11. Vorrichtung (1; 1'; 1"; 1a; 1b; 1'a; 1'b) nach einem der vorhergehenden Ansprüche,
**dadurch gekennzeichnet,**
**dass** zumindest eine Lagerstelle (29) am Boden, an einem Gebäude (23a; 23b), an einem Bauwerk wie Strommasten (28a; 28b), an einer Anhöhe bzw. an einem Berg (24a; 24b; 24c), an einer Brücke (26a; 26b), an einem Baum (25a; 25b) oder an einem Luftfahrzeug (30) wie einem Heißluft- bzw. Gasballon oder Drachen angeordnet ist.

12. Verfahren zur Umwandlung von Energie aus einer Strömung,
**gekennzeichnet durch**
ein zwischen zwei Lagerstellen (5a; 5a'; 5a''; 5a‴; 5b; 5b'; 5b"; 5b‴) gespanntes Segel (2; 2'; 2"; 2‴; 2ʺʺ), wobei in mindestens einer Lagerstelle (5b; 5b'; 5b", 5b‴) ein Ende des Segels (2; 2'; 2"; 2‴; 2ʺʺ) um eine Rolle (6; 6') geführt ist,
wobei das Segel (2; 2'; 2"; 2‴; 2ʺʺ) **durch** eine Strömung in Schwingung versetzt wird und eine **durch** die Längsschwingung des Segels (2; 2'; 2"; 2‴; 2ʺʺ) verursachte oszillierende Drehschwingung der Rolle (6; 6') verwendet wird, um Energie umzuwandeln.

13. Verfahren nach Anspruch 12,
**dadurch gekennzeichnet,**
**dass** eine Vorspannvorrichtung (8; 8'; 8") vorgesehen ist, welche die Vorspannung des Segels (2; 2'; 2"; 2‴; 2ʺʺ) derart regelt, dass eine gewünschte Längsschwingung erreicht wird.

14. Verfahren nach Anspruch 13,
**dadurch gekennzeichnet,**
**dass** die Vorspannvorrichtung (8; 8'; 8") eine Messeinrichtung umfasst, welche die Längsschwingung des Segels (2; 2'; 2''; 2‴; 2ʺʺ) ermittelt.

15. Verfahren nach einem der Ansprüche 12 bis 14,
**dadurch gekennzeichnet,**
**dass** der Rolle (6; 6') ein Freilauf zugeordnet ist, so dass nur Drehmoment in einer Richtung übertragen wird.
